# EUROPÄISCHE PATENTSCHRIFT

(11) **EP 3 459 347 B1**
(45) Veröffentlichungstag und Bekanntmachung des Hinweises auf die Patenterteilung: **06.09.2023**
(21) Anmeldenummer: 18196141.8
(22) Anmeldetag: 24.09.2018
(51) Int. Cl.: A01F 29/00, A01K 5/00, A01F 29/12

(54) **LANDWIRTSCHAFTLICHE VERTEILEINRICHTUNG**
AGRICULTURAL DISTRIBUTOR DEVICE
DISPOSITIF D'ÉPANDAGE AGRICOLE

(30) Priorität: 22.09.2017 DE 102017122037
(43) Veröffentlichungstag der Anmeldung: 27.03.2019
(73) Patentinhaber: Hartmann GmbH & Co. KG, 92265 Edelsfeld (DE)
(72) Erfinder: Hartmann, Hans, 92265 Edelsfeld (DE)
(74) Vertreter: Schön, Christoph

(56) Entgegenhaltungen:
- AT-B- 381 610
- CH-A- 184 806
- DE-U1- 9 416 478
- US-A1- 2008 185 464

## Beschreibung

Die vorliegende Erfindung betrifft eine landwirtschaftliche Verteileinrichtung zum Verteilen von Verteilgut, wie Einstreu oder Futter.

Es ist eine übliche Aufgabe in der Landwirtschaft, dass Stroh oder Futter für Tiere verteilt werden muss. Dies betrifft insbesondere Einstreu für Ställe. Die Einstreu besteht häufig aus Stroh und wird üblicherweise in Ballen geliefert. Diese Ballen müssen entpackt werden und mit einer Verteileinrichtung müssen die einzelnen Fasern der Einstreu auf den gewünschten (Stall-)Bereich verteilt werden. Um dabei die Faserlängen der Einstreu zu reduzieren, sind Strohmühlen bekannt, die auch einen Ausblasluftstrom erzeugen, mit dem die Einstreu ausgegeben wird.

Es können in der Einstreu Fremdkörper enthalten sein, wie insbesondere Steine, Glasscherben, Metallteile oder Holz. Diese Fremdkörper können das Vieh verletzen. Zudem können gerade Steine, die beim Auswurf der Einstreu gegen metallische Teile der Verteileinrichtung oder des Stalls schlagen, zu einer Funkenbildung führen. Gerade bei der staubhaltigen Luft kann es zu einer Staubexplosion oder einem Brand kommen. Aus DE 195 10 215 A1 ist bekannt, dass man bei der Ausgabe in der Einstreu mitgeführte Steine und/oder Fremdkörper aufgrund ihres Gewichts aussondern kann und neben einer Auswerferöffnung der Verteilvorrichtung absondern kann. Andere Verteileinrichtungen sind aus DE9416478 U1, AT381610 B, CH184806 A und US2008/185464 A1 bekannt,

Aufgabe der vorliegenden Erfindung ist es, das Abtrennen von Fremdkörpern von der Einstreu zu verbessern. Diese Aufgabe wird mit den Merkmalen des Anspruchs 1 gelöst. Bevorzugte Weiterbildungen sind Gegenstand der abhängigen Ansprüche.

Eine landwirtschaftliche Verteileinrichtung zum Verteilen von Verteilgut, insbesondere von Einstreu, umfasst eine Zuführvorrichtung zum Zuführen des Verteilguts in einen Trennbereich, der eingerichtet ist, einen Luftstrom bereitzustellen, der zumindest teilweise entgegen der Schwerkraftrichtung ausgerichtet ist, um auf Basis Ihrer spezifischen Dichte Störkörper, wie insbesondere Holz, Steine oder Metall, von dem Verteilgut abzutrennen. Eine dem Trennbereich nachgelagerte Gebläseeinheit, umfasst ein Gebläse, um das Verteilgut auszugeben. Die Störkörper haben insbesondere eine höhere Dichte als das Verteilgut. So kann eine Selektion abhängig von dem Gewicht durchgeführt werden. Schwere Bestandteile können nicht von dem Luftstrom nach oben geleitet werden, sondern fallen zur Selektion nach unten.

Nach der Erfindung ist für das Verteilgut eingangsseitig in dem Trennbereich eine Bewegungsrichtung vorgesehen ist, die einen in Schwerkraftrichtung gerichteten Bewegungsanteil (bevorzugt also nach unten) aufweist, wobei eine Weiterführeinrichtung einen senkrecht zur Schwerkraftrichtung gerichteten Bewegungsanteil aufweist, um über die Weiterführeinrichtung das Verteilgut zur Gebläseeinheit zu fördern. Anders ausgedrückt kann das Verteilgut in den Trennbereich fallen und wird dort abgelenkt und zumindest anteilig mit einer seitlichen Bewegung wegbefördert. Bei dieser Umlenkbewegungkönnen schwerere Bestandteile abgesondert erden.

Insbesondere kann die Weiterführeinrichtung als eine Schnecke ausgeführt sein. Dies ist eine einfache Möglichkeit, über die freien Räume in den Gängen der Schnecke das Material axial zu fördern. Zusätzlich werden die Streubestandteile und Störstoffe durch die Eigenrotation tangential um die Schnecke gefördert. Wenn sich dabei schwere Störstoffe seitlich oder unterhalb der Schnecke befinden, können diese aufgrund der Schwerkraft herabfallen. Die Einstreu selbst fällt dabei weitestgehend nicht herab, da sie sich umlaufend um die Schnecke legt und so weitergeführt wird ohne herabzufallen. Alternativ kann die Weiterführeinrichtung auch als ein Förderband oder dergleichen ausgeführt sein. Der nachfolgend definierte optionale Luftstrom wirkt zusätzlich gegen ein Herabfallen der Einstreu.

Nach der Erfindung ist unterhalb der Weiterführvorrichtung ein Auffangbereich für die abgetrennten Störkörper angeordnet In diesem Behälter können die Störkörper gesammelt werden. Vorteilhaft ist dabei ein Füllstandssensor, wie insbesondere ein Gewichtssensor, um automatisiert eine Warnmitteilung zu generieren, wenn der Auffangbereich einen vorbestimmten Füllungsgrad erreicht hat. In einer bevorzugten Ausführungsform kann der Auffangbereich als ein entnehmbarer Behälter, wie insbesondere eine Wanne, ausgeführt sein.

Konstruktiv kann die Vorrichtung so ausgestaltet sein, dass die Rotationsachsen der Weiterführvorrichtung und der Gebläseeinheit voneinander unabhängig ausgeführt sind. Dies ist vorteilhaft, da die Gebläseeinheit mit einer deutlich höheren Vorschubgeschwindigkeit als die Weiterführvorrichtung betrieben werden kann. Auch ist es so möglich, die Geschwindigkeiten unabhängig voneinander zu steuern. Alternativ könnten beide Komponenten auch gekoppelt sein, wie z.B. über ein zwischengeschaltetes Getriebe kann für jede der Achsen eine optimale Geschwindigkeit eingestellt werden.

Die Rotationsachsen der Weiterführvorrichtung und der Gebläseeinheit können auch einen seitlichen oder vertikalen Achsversatz aufweisen, der insbesondere kleiner als die Hälfte des Außendurchmessers der Weiterführvorrichtung ist. Alternativ und/oder zusätzlich können diese Rotationsachsen kollinear sein. In diesen Fällen ist gewährleistet, dass eine Förderung in die Gebläseeinheit möglich ist.

Nach der Erfindung ist auch vorgesehen der Gebläseeinheit vorgelagert eine Einrichtung, die geeignet ist, einen Luftstrom zu erzeugen, der insbesondere zumindest teilweise in gegensätzlicher Richtung zu dem Transportfluss des Verteilguts ausgerichtet ist. Hierbei kann es sich um eine alternative Ausführungsform der Trennvorrichtung handeln. Dieser Luftstrom wird durch ein getrenntes Gebläse erzeugt. Alternativ kann die Gebläseeinheit einen Gebläserotor umfassen, der dazu dient, den Luftstrom zu realisieren, der zur Abtrennung der Fremdkörper dient. Dieser Gebläserotor kann ein zusätzlicher Rotor in einem getrennten Bereich der Verteilvorrichtung sein. Der Luftstrom in der Trennvorrichtung kann teilweise entgegen der Richtung des Transportflusses ausgerichtet sein. Alternativ und/oder zusätzlich kann der Luftstrom senkrecht zur Richtung des Transportflusses des Verteilguts ausgerichtet sein. Im letzteren Fall wird praktisch das Verteilgut weggeblasen, während der Fluss der Störkörper uneingeschränkt weitergeleitet und dann abgeleitet wird. Diese zweite Variante kann durch ein Gitter- bzw. Lochband realisiert werden, auf dem das Verteilgut gefördert wird und von dem es so weggeblasen wird, dass schwerere Anteile nicht abgeleitet werden. Die erste Variante ist aber gegenwärtig bevorzugter, da hier weniger Energieaufwand nötig ist und eine bessere Trennung ermöglicht wird.

Die Zuführvorrichtung kann einen Stau- bzw. Lagerbereich für das Verteilgut umfassen und eine Separiervorrichtung, die bevorzugt zumindest eine Fräsvorrichtung aufweist. Alternativ und/oder zusätzlich kann die Transportvorrichtung als ein Schieber ausgeführt sein. Die Transportvorrichtung kann einen motorischen Antrieb umfassen und/oder eingerichtet sein, mithilfe der Schwerkraft zu fördern.

Auch kann die Mittelachse der Gebläseeinheit, insbesondere der Strohmühle in vertikaler Richtung unterhalb der Auflagefläche des Vorratsbereichs liegen. Dies beschreibt eine Ausführungsform mit einer niedrig liegenden Gebläseeinheit und gerade hier ist es relevant, eine Absonderung von Fremdkörpern konstruktiv vorzusehen. Bei anderen Ausführungsformen, bei denen die Einstreu zu der Gebläseeinheit hochgefördert wird, ist es nämlich konstruktiv viel einfacher direkt beim Hochfördern in einem Luftstrom die Absonderung vorzunehmen.

Nachfolgend wird eine bevorzugte Ausführungsform anhand der Figuren beispielhaft erläutert. Es zeigen:
Fig. 1 eine schematische Seitenansicht einer Verteileinrichtung für Einstreu und
Fig. 2 zeigt einen Schnitt A-A der Fig. 1.

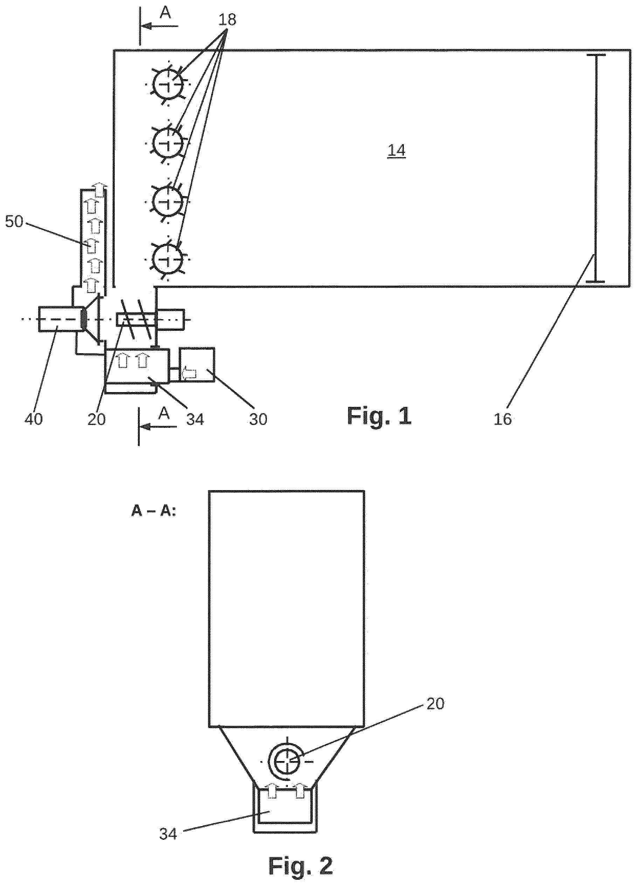

Die in Fig. 1 dargestellte landwirtschaftliche Verteileinrichtung umfasst in dem großen mittleren Abschnitt einen Vorratsbereich 14, in den bspw. mehrere Strohballen eingebracht werden können. Der Vorratsbereich umfasst Seitenwände, die verhindern, dass die Strohballen seitlich (also gemäß Fig. 1 senkrecht zur Zeichenebene) aus dem Vorratsbereich 14 fallen können. Zumindest eine der Seitenwände ist bevorzugt mit einer z.B. Tür versehen, so dass hierüber der Vorratsbereich 14 bspw. mit einem Stapler befüllt werden kann. Auf der rechten Seite kann ein Strohschieber 16 angeordnet sein, der in Längsrichtung des Vorratsbereichs 14, also insbesondere in Richtung auf bspw. Fräswalzen 18 verschiebbar ist. Hierfür kann ein (nicht dargestellter) Antrieb, wie ein Zugantrieb, wie insbesondere über Ketten, verwendet werden, wobei die Ketten benachbart zu den Fräswalzen angetrieben oder umgelenkt werden und mit einem Ende an dem Strohschieber 16 befestigt sind. Alternativ kann auch ein Band- oder Riemenantrieb oder ein Förderband zum Einsatz kommen.

Allgemein gesprochen wird so eine Vorrichtung bereitgestellt, die das Stroh zu den Fräswalzen 18 fördert. In Fig. 1 sind vier Fräswalzen 18 gezeigt, die parallel zueinander so angeordnet sind, dass sie die Seitenfläche der dorthin geschobenen Strohballen bearbeiten können. Bei der Bearbeitung reißen Zähne oder Bolzen, die an den Mantelflächen der Fräswalzen 18 vorstehen, Strohhalme aus dem Strohballen. Aufgrund der Schwerkraft fallen diese Strohalme, die nachfolgend auch als Einstreu bezeichnet werden, hinter den Fräswalzen 18, also gemäß Fig. 1 links von den Fräswalzen, vereinzelt herab.

Die Ebene des Fallens ist in dem Schnitt A-A der Fig. 2 gezeigt. Im unteren Bereich dieses Fallabschnitts ist eine bevorzugt trichterartige Verjüngung vorgesehen, so dass diese Strohbestandteile, also bspw. Einstreu z.B. auf eine Schnecke 20 fallen können. Die Rotationsrichtung der Schnecke ist so, dass die darauf fallende Einstreu in Richtung zu einer Strohmühle 40 gefördert wird. Die Strohmühle hat an einem seitlich freien Ende eine Mehrzahl von Schneidzähnen, durch die die Einstreu zerkleinert wird. Anschließend wird die Einstreu durch Zentrifugalkräfte beschleunigt und radial durch einen Ausblasestutzen 50 ausgegeben. So wird die Einstreu zu Liegeplätzen des Viehs befördert. Alternativ kann auch faserartiges Futter mit einer derartigen Vorrichtung bearbeitet und/oder ausgegeben werden.

Beim Fallen kommt die Einstreu auf dem Schraubengang der Schnecke 20 zum Liegen. Aufgrund der Rotation der Schnecke 20 wird die Einstreu teils an die entsprechende Wand des Trichters (siehe Fig. 2) gedrückt und teils unmittelbar in Richtung zu der Strohmühle 40 gefördert. Durch die erste Bewegung wird die Einstreu auch in den freien Bereich zwischen den Schraubengängen gedrückt. Zwar würde ein Großteil der Einstreu durch Verhakungen zwischen den Bestandteilen auch unterhalb der Schnecke 20 in diesem freien Bereich bleiben. Aber ein kleinerer Teil der Einstreu würde aber von der Schnecke nach unten in Richtung des Auffangbereichs 34 fallen. Ergänzend ist hier aber ein Gebläse 30 vorgesehen, welches einen nach oben gerichteten Luftstrom in dem Auffangbereich 34 bewirkt, der dazu dient, dass keine Einstreu in diesen Auffangbereich 34 fallen kann. Dieser Luftstrom ist von dem Auffangbereich 34 ausgehend nach oben (und insbesondere vertikal nach oben) gerichtet, so dass die Einstreu praktisch komplett im Bereich der Schnecke 20 verbleibt. Schwerere Bestandteile hingegen können von diesem Luftstrom nicht beeinflusst werden und fallen in den Auffangbereich 34. Zu diesen schweren Bestandteilen zählen Holz, Steine und/oder Metallteile. Auf diese Weise wird eine Trennung von schwereren und leichteren Bestandteilen durchgeführt.

Nicht nach der Erfindung sind darüber hinaus andere Varianten des Trennens umfasst. Dies kann bspw. durch ein Förderband geschehen, auf dem die Einstreu verteilt wird und dann weggeblasen wird. Aber die bevorzugte Ausführungsform der Fig. 1 und 2 ist gegenwärtig bevorzugt, da der energetische Aufwand gegenüber anderen Varianten deutlich reduziert ist. Denn wie bereits beschrieben, verbleibt ein nennenswerter Teil der Einstreu in der Schnecke und wird von dort in Richtung zu der Strohmühle transportiert. Somit muss nur ein recht kleiner Anteil der Einstreu überhaupt durch den Luftstrom bewegt werden, was bedeutet, dass ein gering dimensioniertes Gebläse verwendet werden kann. Darüber hinaus findet eine Art Walkung in der Schnecke statt, dies bedeutet, dass Anteile der Einstreu und der darin enthaltenen Fremdpartikel sich zu einem ersten Zeitpunkt weiter innenliegend und zu einem späteren zweiten Zeitpunkt weiter außenliegend relativ zur Schnecke 20 befinden. Gerade zu Zeitpunkten, an den die Fremdpartikel außenliegend sind, kann die gewichtsmäßige Trennung stattfinden.

Fig. 1 zeigt, dass zwei unterschiedliche Gebläse zum Einsatz kommen. Dies ist zunächst das beschriebene Gebläse 30 und zudem das weitere Gebläse, dass in der Strohmühle 40 vorgesehen ist, bzw. Luft aus ihr entweichen lässt. Die Strohmühle ist nämlich mit einem starken Motor versehen, so dass ein entsprechendes Rotationsteil der Strohmühle 40 in eine schnelle Rotation versetzt werden kann, um, wie bereits beschrieben, die Einstreu zum Ausblasstutzen 50 auszugeben. Dies geschieht über einen Luftstrom, der (nicht dargestellt) in die Strohmühle 40 einströmt und den bereits beschriebenen Ausblaseluftstrom über den Ausblasstutzen 50 liefert.

Bevorzugt kann das Gebläse 30 im Leistungsbereich von 500 W bis 1,8kW liegen. Hingegen hat die Strohmühle typischerweise eine Leistung von 6 bis 20 kW. Allgemein gesprochen werden Ausführungsformen bevorzugt, bei denen die Leistung des Gebläses 30 zum gewichtmäßigen Trennen höchstens 20%, bevorzugt höchstens 15% der Leistung der Strohmühle 40 beträgt. Bei größeren Leistungen würde in dem Gebläse 30 zu viel Energie dissipiert.

Ein Vorteil des beschriebenen Trennens von Fremdkörpern von der Einstreu bereits vor dem Eingang von der Strohmühle 40 liegt darin, dass hierdurch die Strohmühle 40 vor Beschädigungen geschützt wird. Eine Funktion der Strohmühle ist nämlich, die Gesamtlänge der Einstreubestandteile zu reduzieren. Fremdkörper können diese Schneid-/ bzw. Reißwerkzeuge schädigen. Zudem können Steine, die mit hoher Energie gegen Wandteile oder den Rotor der Strohmühle 40 schlagen, zu einer Funkenbildung führen. Da in der Strohmühle ein hoher Feinstaubanteil von brennbaren Partikeln herrscht, könnte es im schlimmsten Fall zu einer Staubexplosion kommen. Durch die Entfernung der Steine wird diese Gefahr deutlich reduziert. Durch die geringe Leistung der Lüftung 30 entstehen keine großen Kräfte auf die Fremdkörper, so dass die Gefahr der Funkenbildung minimiert ist.

Wie in den Fig. 1 und 2 gezeigt ist, kann der Auffangbereich 34 als eine Wanne ausgeführt sein, die bspw. wie eine Lade aus der Vorrichtung entnommen werden kann, um sie zu leeren. Ein nicht dargestellter Sensor, wie z.B. ein Gewichtssensor, wie auch ein kapazitiver Sensor und/oder (Durch-)Lichtsensor oder dergleichen können eingesetzt werden, um automatisch zu erkennen, wann der Auffangbereich 34 gefüllt ist. Wie in Fig. 1 mit dem von dem Gebläse 30 ausgehenden Pfeil gezeigt, wird der Luftstrom aus dem Gebläse 30 in untere Abschnitte des Auffangbereichs 34 geleitet, um so leichtere Komponenten aufwirbeln zu können, die sich dort ggf. abgelagert haben könnten. Dieser Luftstrom wird bevorzugt nach oben abgeleitet. D.h. er umströmt zu beiden Seiten die Schnecke 20, und durchströmt anschließend Einstreu, die ggf. auf der Schnecke 20 aufliegt. Alternativ und/oder zusätzlich kann er in die Strohfräse geleitet werden. Aufgrund der Querschnittsvergrößerung oberhalb der Schnecke kann die Luft, die in Fig. 1 mit den drei Pfeilen benachbart zu den Fräswalzen 18 gezeigt ist, und die nach oben abgeleitet wird, keine nennenswerten Anteile von Einstreu wegfördern.

### Bezugszeichen:

14 Vorratsbereich
16 Strohschieber
18 Fräswalzen
20 Weiterführvorrichtung, Schneckentrieb
30 Gebläse
34 Auffangbereich
40 Gebläseeinheit, Strohmühle
50 Ausblasstutzen

## Patentansprüche

1. Landwirtschaftliche Verteileinrichtung zum Verteilen von Verteilgut, insbesondere von Einstreu, mit einer Zuführvorrichtung (16, 18) zum Zuführen des Verteilguts in einen Trennbereich (20, 30), der eingerichtet ist, einen Luftstrom bereitzustellen, der zumindest teilweise entgegen der Schwerkraftrichtung ausgerichtet ist, um auf Basis der spezifischen Dichte Störkörper, wie insbesondere Holz, Steine oder Metall, von dem Verteilgut abzutrennen;
mit einer dem Trennbereich nachgelagerten Gebläseeinheit (40), insbesondere einer Strohmühle (40), die eingerichtet ist, das Verteilgut auszugeben; und einem der Gebläseeinheit (40) vorgelagerten weiteren Gebläse, das geeignet ist, einen Luftstrom zu erzeugen, der insbesondere zumindest teilweise in gegensätzlicher Richtung zu dem Transportfluss des Verteilguts ausgerichtet ist;
wobei in dem Trennbereich (20, 30) für das Verteilgut eingangsseitig eine Bewegungsrichtung vorgesehen ist, die einen in Schwerkraftrichtung gerichteten Bewegungsanteil aufweist, wobei eine als eine Schnecke ausgeführte Weiterführvorrichtung (20) einen senkrecht zur Schwerkraftrichtung gerichteten Bewegungsanteil aufweist, um über die Weiterführvorrichtung (20) das Verteilgut zur Gebläseeinheit (40) zu fördern, und wobei unterhalb der Weiterführvorrichtung (20) ein Auffangbereich (34) für die abgetrennten Störkörper angeordnet ist.

2. Verteileinrichtung gemäß Anspruch 1, **dadurch gekennzeichnet**, für den Auffangbereich (34) ein Füllstandssensor, bevorzugt ein Gewichtssensor vorgesehen ist, um automatisiert eine Warnmitteilung zu generieren, wenn der Auffangbereich (34) einen vorbestimmten Füllungsgrad erreicht hat.

3. Verteileinrichtung gemäß Anspruch 1 oder 2, **dadurch gekennzeichnet, dass** der Auffangbereich (34) als ein entnehmbarer Behälter, wie insbesondere eine Wanne ausgeführt ist.

4. Verteileinrichtung gemäß einem der vorangegangenen Ansprüche, **dadurch gekennzeichnet, dass** die Rotationsachsen der Weiterführvorrichtung (20) und der Gebläseeinheit (40) voneinander unabhängig ausgeführt sind und insbesondere deren Rotationsachsen einen radialen Achsversatz aufweisen, der kleiner als die Hälfte des Außendurchmessers der Weiterführvorrichtung (20) ist und wobei besonders bevorzugt diese Rotationsachsen kollinear sind.

5. Verteileinrichtung gemäß einem der vorangegangenen Ansprüche, **dadurch gekennzeichnet, dass** die Zuführvorrichtung einen Vorratsbereich (14) für das Verteilgut umfasst, eine Separiervorrichtung, die insbesondere zumindest eine Fräsvorrichtung (18) umfasst, und insbesondere eine Transportvorrichtung (16), wie insbesondere einen Strohschieber, umfasst.

6. Verteileinrichtung gemäß einem der vorangegangenen Ansprüche, **dadurch gekennzeichnet, dass** die Mittelachse der nachgelagerten Gebläseeinheit (40), insbesondere der Strohmühle (40) in vertikaler Richtung unterhalb der Auflagefläche des Vorratsbereichs (14) liegt.

## Claims

1. Agricultural distribution device for distributing distribution material, particularly bedding, comprising a feeding device (16, 18) for feeding the distribution material into a separation area (20, 30) configured to provide an air flow which is at least partly directed opposite to the direction of gravity for separating, on the basis of the specific density, disruptive bodies such as particularly wood, stones, or metal from the distribution material;
a blower unit (40), particularly a straw mill (40), which is positioned downstream of the separation area and which is configured to discharge the distribution material; and another blower which is positioned upstream of the blower unit (40) and which is capable of generating an air flow which is particularly, at least partly, directed in a direction opposite to the transport flow of the distribution material;
wherein, in the separation area (20, 30) for the distribution material, a moving direction is provided on the inlet side which includes a movement portion directed in the direction of gravity, wherein an onward transport device (20) configured in the form of a screw, includes a movement portion directed perpendicular to the direction of gravity for feeding the distribution material to the blower unit (40) via the onward transport device (20), and wherein a collecting area (34) for the separated disruptive bodies is disposed below the onward transport device (20).

2. Distribution device according to claim 1, **characterized in that** for the collecting area (34) a fill-level sensor, preferably a weight sensor, is provided for automatedly generating a warning notification when the collecting area (34) has reached a predetermined fill-level.

3. Distribution device according to claim 1 or 2, **characterized in that** the collecting area (34) is designed as a removable container such as particularly a tray.

4. Distribution device according to any one of the preceding claims, **characterized in that** the rotational axes of the onward transport device (20) and of the blower unit (40) are provided independent of each other and **in that** particularly their rotational axes have a radial axial offset which is smaller than half the outer diameter of the onward transport device (20), and wherein in a particularly preferred embodiment these rotational axes are collinear.

5. Distribution device according to any one of the preceding claims, **characterized in that** the feeding device comprises a storage area (14) for the distribution material, a separating device comprising particularly at least one milling device (18), and particularly a transport device (16) such as particularly a straw pusher.

6. Distribution device according to any one of the preceding claims, **characterized in that** the central axis of the downstream blower unit (40), particularly of the straw mill (40), is positioned in a vertical direction below the support surface of the storage area (14).

## Revendications

1. Dispositif d'épandage agricole pour épandre un produit d'épandage, en particulier de la litière, avec un dispositif d'alimentation (16, 18) pour acheminer le produit d'épandage dans une zone de séparation (20, 30), qui est agencée pour fournir un flux d'air, qui est orienté au moins en partie en opposition à la direction de la gravité pour séparer du produit d'épandage sur la base de la densité spécifique les corps perturbateurs, comme du bois, des pierres ou du métal,
avec une unité de ventilation (40) montée en aval de la zone de séparation, en particulier une pailleuse (40), qui est agencée pour délivrer le produit d'épandage et une autre ventilation montée en amont de l'unité de ventilation (40) qui est adaptée pour produire un flux d'air, qui est orienté en particulier au moins en partie en direction opposée au flux de transport du produit d'épandage,
dans lequel dans la zone de séparation (20, 30) pour le produit d'épandage est prévu du côté entrée un sens de déplacement, qui comporte une partie de déplacement dirigée en direction de la gravité, dans lequel un dispositif de transfert (20) réalisé sous la forme d'une vis sans fin, comporte une partie de déplacement dirigée perpendiculairement à la direction de la gravité pour transporter le produit d'épandage vers l'unité de ventilation (40) par le biais du dispositif de transfert (20) et dans lequel une zone de collecte (34) pour les corps perturbateurs séparés est disposée en dessous du dispositif de transfert (20).

2. Dispositif d'épandage selon la revendication 1, **caractérisé en ce qu'**un capteur de niveau de remplissage, de préférence un capteur de poids, est prévu pour la zone de collecte (34) pour générer de façon automatisée une information d'alerte, lorsque la zone de collecte (34) a atteint un degré de remplissage prédéterminé.

3. Dispositif d'épandage selon la revendication 1 ou 2, **caractérisé en ce que** la zone de collecte (34) est exécutée sous la forme d'un conteneur amovible, comme en particulier un bac.

4. Dispositif d'épandage selon l'une quelconque des revendications précédentes, **caractérisé en ce que** les axes de rotations du dispositif de transfert (20) et l'unité de ventilation (40) sont exécutés indépendamment l'un de l'autre et comportent en particulier un déport d'axe radial de leurs axes de rotation, qui est plus petit que la moitié du diamètre extérieur du dispositif de transfert (20) et sachant en particulier que les axes de rotation sont de préférence colinéaires.

5. Dispositif d'épandage selon l'une quelconque des revendications précédentes, **caractérisé en ce que** le dispositif d'alimentation comprend une zone de stockage (14) pour le produit d'épandage, un dispositif de séparation, qui comprend en particulier au moins un dispositif de fraisage (18) et comprend en particulier un dispositif de transport (16), comme en particulier un pousse-paille.

6. Dispositif d'épandage selon l'une quelconque des revendications précédentes, **caractérisé en ce que** l'axe central de l'unité de ventilation montée en aval (40), en particulier de la pailleuse (40), se situe en direction verticale en dessous de la surface d'appui de la zone de stockage (14).
